# EUROPEAN PATENT APPLICATION

(11) **EP 3 709 162 A1**
(43) Date of publication of application: **16.09.2020**
(21) Application number: 19162942.7
(22) Date of filing: 14.03.2019
(51) Int. Cl.: G06F 9/455, H04L 29/06, H04L 29/08, H04L 9/08

(54) **SECURE MULTILAYER CLOUD SYSTEM AND METHOD OF EXCHANGING DATA**

(71) Applicant: Rohde & Schwarz GmbH & Co. KG, 81671 München (DE)
(72) Inventor: QUINT, Alexander Bruno, 81671 München (DE); RICHTER, Fabian, 81671 München (DE); SCHELLHAAS, Benedikt, 81671 München (DE)
(74) Representative: Prinz & Partner mbB

(57) **Abstract**

A secure multilayer cloud system (10) comprises at least one server unit (12) and at least one client unit (14). The server unit (12) and the client unit (14) are connected with each other via a gate unit (16) in a communicative manner. The gate unit (16) is configured to encrypt data traffic from the client unit (14) to the server unit (12). The gate unit (16) is also configured to decrypt data traffic from the server unit (12) to the client unit (14). In addition, the gate unit (16) is configured to convert different data formats of data received from the server unit (12) into one common data format and/or to convert a common data format of data received from the client unit (14) into at least two different data formats. Further, a method of exchanging data is described.

## Description

The invention relates to a secure multilayer cloud system. Further, the invention relates to a method of exchanging data.

In the state of the art, cloud systems are known that comprise a server unit as well as at least one client unit, which communicate with each other in order to share data or rather provide data. For instance, the cloud systems may relate to a data cloud with a cloud unit providing data that can be accessed by the at least one client unit. Moreover, several client units may access the data provided by the server unit.

For establishing a secure communication, it is known that the cloud system uses key means for encrypting and/or decrypting the data exchanged wherein the key means used is assigned to the server unit of the cloud system. In other words, the respective server unit provides the key means to be used for secure communication. Accordingly, the client assigned to the client unit depends on the operator of the server unit, for instance the cloud provider for cloud services and cloud security. Therefore, the client cannot apply its own security standards to the cloud system, as the client fully depends on the security mechanism provided by the operator of the server unit, namely the cloud provider.

Furthermore, a multilayer cloud system, namely a system handling data with different data formats, cannot be secured by the techniques known in the state of the art in an efficient manner.

Moreover, different server units use different application programming interfaces (APIs), which further complicate establishing a secure communication in a multilayer cloud system.

Accordingly, there is a need for an efficient and simple possibility with regard to secure communication in a multilayer cloud system.

The invention provides a secure multilayer cloud system that comprises at least one server unit and at least one client unit. The server unit and the client unit are connected with each other via a gate unit in a communicative manner. The gate unit is configured to encrypt data traffic from the client unit to the server unit. The gate unit is also configured to decrypt data traffic from the server unit to the client unit. In addition, the gate unit is configured to convert different data formats of data received from the server unit into one common data format and/or to convert a common data format of data received from the client unit into at least two different data formats.

Accordingly, the secure multilayer cloud system comprises a data format conversion functionality between the server unit and the client unit besides the encrypting/decrypting functionality. The data format conversion functionality ensures that a client-based security can be established by the secure multilayer cloud system, in particular via the gate unit that is located between the server unit and the client unit and that handles the data exchange between the server unit and the client unit. In fact, the data exchanged between the server unit and the client unit is encrypted or rather decrypted by the gate unit while the gate unit simultaneously converts the data with respect to its/their data format(s) appropriately.

The different data formats used by the at least one server unit may correspond to GCS, BLOB and/or S3.

The common data format used by the at least one client unit may correspond to Simple Object Access Protocol (SOAP) or rather Representational State Transfer (REST). In other words, the common data format may correspond to a standards-based Web services access protocol.

In fact, the client unit may be configured to access a web service that may be provided by the at least one server unit.

In general, the client unit may select its common data format independently, as the client unit does not have to follow the specification or rather requirement of the server unit. Accordingly, the secure multilayer cloud system may provide a client-based security such that the client does not have to rely on the security standards of the operator of the at least one server unit.

According to an aspect, the server unit and the client unit are configured to exchange data via the gate unit. As mentioned above, all data exchanged is routed via the gate unit such that the data is decrypted or rather encrypted by the gate unit in an appropriate manner. Simultaneously, the data format of the data exchanged is adapted appropriately, which depends on the data flow direction.

For instance, the data exchanged has an encrypted part and a virtually generated part with plaintext meta-data. In fact, the original data exchanged is processed by the gate unit such that the encrypted part and the virtually generated part are provided. The virtually generated part only comprises the plaintext meta-data without any confidential content. In contrast, the encrypted part may comprise the confidential content. However, the encrypted part is split into fragments, which are encrypted.

Put another way, the virtually generated part replaces the original file. However, the virtually generated part contains only metadata without any confidential content. An original file of the data exchanged is encrypted and fragmented into chunks.

Another aspect provides that the client unit comprises at least one key means for encrypting and/or decrypting. Particularly, only the client unit comprises the key means. Thus, a real security trusted provider is not necessary anymore since the client unit itself is enabled to provide the key means for encrypting and/or decrypting. This simplifies secure communication in the multilayer cloud system, particularly with regard to different data formats used by the at least one server unit.

For instance, the at least one server unit is a cloud unit. As the server unit is part of the secure multilayer cloud system, the server unit may correspond to a cloud unit that can be accessed by a plurality of different client units.

Another aspect provides that the server unit and/or the client unit are/is connected to the gate unit via a respective network. The respective network may be established by the internet or a local area network. In fact, the respective network may correspond to a wireless network or rather a wired network.

According to another aspect, the at least two different data formats are assigned to different server units. Thus, the data processed by the gate unit may be forwarded to two different server units that are part of the multilayer cloud system.

Alternatively, the gate unit receives data from two different server units that are part of the multilayer cloud system such that the gate unit processes the respective data streams with different data formats in order to forward the data to the client unit in an appropriate manner.

Generally, the gate unit configured to encrypt/decrypt the data traffic ensures secure communication with different server units that use different data formats, as the gate unit provides the data format conversion functionality. Accordingly, it is not necessary that the client has to decide which server unit shall be used for the intended cloud system. In fact, the data traffic is adapted by the gate unit in an automatic manner.

The gate unit may be a trusted gate that provides high security, dynamic encryption, secure full-text search and/or secure, distributed storage of encrypted documents.

Further, the invention provides a method of exchanging data from at least one server unit to at least one client unit of a secure multilayer cloud system, with the following steps:
- Transmitting data with at least two different data formats via the server unit,
- Receiving the data via a gate unit,
- Converting the data with the at least two different data formats into one common data format via the gate unit, and
- Forwarding the converted data to the client unit.

Hence, the method relates to forwarding data from the at least one server unit to the at least one client unit via the gate unit. The respective data received from the at least one server unit is assigned to two different data formats that are converted by the gate unit into one common data format that can be handled by the client unit while decrypting the data received from the server unit. Put another way, the gate unit simultaneously decrypts and converts the data received from the server unit.

Further, the invention provides a method of exchanging data from at least one client unit to at least one server unit of a secure multilayer cloud system, with the following steps:
- Transmitting data with a common data format via the client unit,
- Receiving the data via a gate unit,
- Converting the data with the common data format into data with at least two different data formats via the gate unit, and
- Forwarding the converted data to the server unit.

Hence, the method relates to forwarding data from the at least one client unit to the at least one server unit via the gate unit. The respective data received from the at least one client unit is assigned to a common data format that is converted by the gate unit into two different data formats while encrypting the data received from the client unit. Put another way, the gate unit simultaneously encrypts and converts the data received from the client unit.

In general, both methods mentioned may be extended by the respective other method such that the method ensures data exchange in both directions, namely from the client unit to the server unit and from the server unit to the client unit, respectively.

In other words, the method of exchanging data from at least one server unit to at least one client unit may additionally comprise the steps:
- Transmitting data with a common data format via the client unit,
- Receiving the data via a gate unit,
- Converting the data with the common data format into data with at least two different data formats via the gate unit, and
- Forwarding the converted data to the server unit.

In a similar manner, the method of exchanging data from at least one client unit to at least one server unit may additionally comprise the steps:
- Transmitting data with at least two different data formats via the server unit,
- Receiving the data via a gate unit,
- Converting the data with the at least two different data formats into one common data format via the gate unit, and
- Forwarding the converted data to the client unit.

In general, the data may have an encrypted part and a virtually generated part with plaintext meta-data. The original data exchanged is processed by the gate unit such that the encrypted part and the virtually generated part are provided. The virtually generated part only comprises the plaintext meta-data without any confidential content. In contrast, the encrypted part may comprise the confidential content. However, the encrypted part may be split into fragments, which are encrypted. Put another way, the virtually generated part replaces the original file. However, the virtually generated part contains only metadata without any confidential content. An original file of the data exchanged is encrypted and fragmented into chunks.

Moreover, the client unit may comprise at least one key means for encrypting and/or decrypting. Particularly, only the client unit comprises the key means. Thus, it is not necessary that the provider or rather server unit is a real security trusted provider, as the respective client unit provides the key means. Accordingly, a client-based security is established, as the key means are not set by the server unit or rather the server provider.

Furthermore, the server unit and/or the client unit may be connected to the gate unit via a respective network. As mentioned above, the respective network might be a wireless one or rather a wired one.

The invention will now be described with reference to a preferred embodiment, which is shown in the enclosed drawings. In the drawings,
- Figure 1 shows a secure multilayer cloud system according to the invention, and
- Figure 2 shows a flow-chart of a method of exchanging data.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

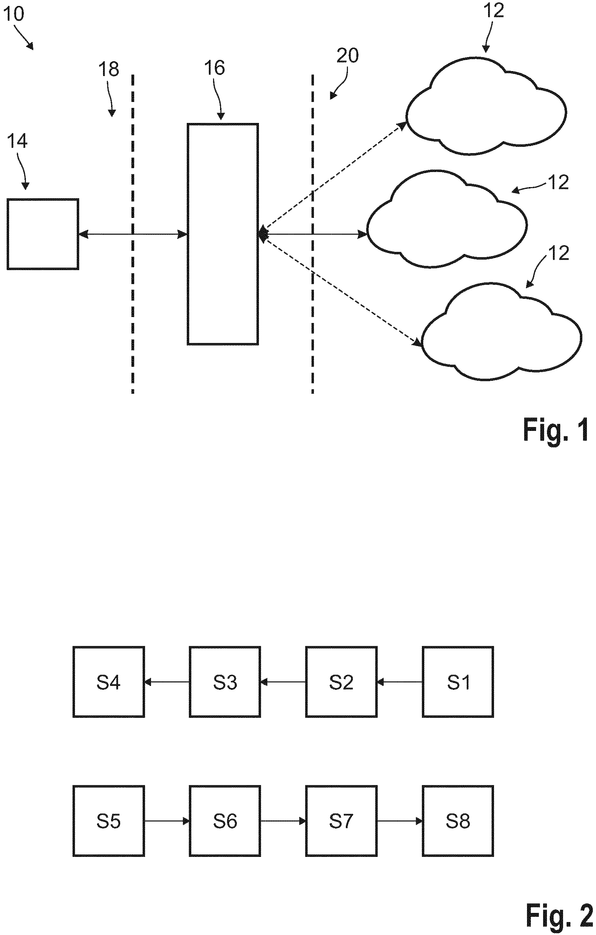

In Figure 1, a cloud system 10 is shown that comprises at least one server unit 12 and at least one client unit 14 that are established to communicate with each other.

The server unit 12 and the client unit 14 both are connected with a gate unit 16 that is located between the server unit 12 and the client unit 14 such that the communication between the at least one server unit 12 and the at least one client unit 14 takes place via the gate unit 16. In other words, the server unit 12 and the client unit 14 are connected with each other via the gate unit 16 in a communicative manner.

Hence, the gate unit 16 is located between the server unit 12 and the client unit 14 such that data traffic of the communication established between the server unit 12 and the client unit 14 is routed via the gate unit 16.

For instance, the server unit 12 as well as the client unit 14 are connected with the gate unit 16 via a respective network 18, 20 that may relate to a wired or rather a wireless network, for instance the internet.

In general, the server units 12 may relate to cloud units that can be accessed by different client units 14.

In fact, the cloud system 10 corresponds a secure multilayer cloud system 10 such that the communication is encrypted.

Accordingly, the gate unit 16 is configured to encrypt the data traffic from the client unit 14 to the server unit 12.

In addition, the gate unit 16 is configured to decrypt data traffic from the server unit 12 to the client unit 14.

Thus, the data traffic is encrypted or rather decrypted by the gate unit 16, which depends on the data flow direction.

As the client unit 14 may generally communicate with different server units 12 or rather the single server unit 12 may provide data with different data formats, the gate unit 16 is also configured to convert different data formats of data received from the at least one server unit 12 into one common data format that can be handled by the at least one client unit 14.

As the communication established between the at least one server unit 12 and the at least one client unit 14 is a bidirectional one, the gate unit 16 is also configured to convert the common data format of data received from the client unit 14 into at least two different data formats.

Thus, data having the common data format may be converted by the gate unit 16 into data with at least two different data formats that are distributed to two different server units 12. Alternatively, the data with two different data formats is forwarded the single server unit 12 that processes data with different data formats.

In any case, the gate unit 16 simultaneously converts the data processed and decrypts/encrypts the data processed.

As the multilayer cloud system 10 corresponds to a secure one, key means for encrypting and/or decrypting is necessary that is provided by the client unit 14 solely. Put another way, only the client unit 14 comprises the key means that is required for decrypting or rather encrypting the respective data exchanged. Accordingly, a real security trusted provider is not necessary, as the client unit 14 itself provides the key means for encrypting and/or decrypting.

In fact, the data exchanged has an encrypted part and a virtually generated part with plaintext meta-data in order to ensure the secure data exchange. The original data exchanged is processed by the gate unit 16 such that the encrypted part and the virtually generated part are provided. The virtually generated part only comprises the plaintext meta-data without any confidential content. The encrypted part may comprise the confidential content, but it is encrypted and fragmented into several chunks that may be stored on different server units 12.

As the respective data is submitted via the gate unit 16, the gate unit 16 relates to a trusted gate that may use the key means provided by the client unit 14 for decrypting and/or encrypting the respective data.

In general, the gate unit 16 provides high security, dynamic encryption, secure full-text search and/or secure, distributed storage of encrypted documents.

In Figure 2, a flow-chart is shown that illustrates communication between the server unit 12 and the client unit 14 in a bidirectional manner.

In a first step S1, data is transmitted with at least two different data formats via the server unit 12 towards the client unit 14.

In a second step S2, the data transmitted is received by the gate unit 16.

In a third step S3, the data received is converted into one common data format by using the gate unit 16 that provides the data format conversion functionality. Hence, the converted data can be handled by the client unit 14 independently from the standards/requirements of the server unit 12. Put another way, the client may have its own standards that are different to the ones of the server/cloud provider operating the server unit 12.

Simultaneously, the data is decrypted by the gate unit 16. For this purpose, the gate unit 16 may access the key means provided by the client unit 14.

In a fourth step S4, the converted data, namely the data with the common data format, is forwarded to the client unit 14 such that the respective data can be used at the client side.

As mentioned above, the communication is a bidirectional one such that data may also be forwarded from the client unit 14 to the server unit 12.

In a fifth step S5, data with a common data format is transmitted via the client unit 14.

The data is received by the gate unit 16 in sixth step S6.

In a seventh step S7, the gate unit 16 converts the data, namely the data with the common data format, into data with at least two different data formats.

Simultaneously, the data is encrypted by the gate unit 16. For this purpose, the gate unit 16 may access the key means provided by the client unit 14.

In an eighth step S8, the converted data, namely the data with the at least two different data formats, is forwarded to the server unit 12.

Thus, a bidirectional communication between the server unit 12 and the client unit 14 is established via the gate unit 16 wherein the server unit 12, the client unit 14 as well as the gate unit 16 establish the secure multilayer cloud system 10.

As the key means is provided by the client unit 14 itself, it is not necessary to have a real security trusted server unit 12. Hence, the customer, namely the one assigned to the client unit 14, is independent from the provider for cloud services and cloud security, namely the operator of the server unit 12.

## Claims

1. A secure multilayer cloud system (10), comprising at least one server unit (12) and at least one client unit (14), wherein the server unit (12) and the client unit (14) are connected with each other via a gate unit (16) in a communicative manner, wherein the gate unit (16) is configured to encrypt data traffic from the client unit (14) to the server unit (12), wherein the gate unit (16) is configured to decrypt data traffic from the server unit (12) to the client unit (14), and wherein the gate unit (16) is configured to convert different data formats of data received from the server unit (12) into one common data format and/or to convert a common data format of data received from the client unit (14) into at least two different data formats.

2. The cloud system (10) according to claim 1, **characterized in that** the server unit (12) and the client unit (14) are configured to exchange data via the gate unit (16).

3. The cloud system (10) according to claim 1 or 2, **characterized in that** the data exchanged has an encrypted part and a virtually generated part with plaintext meta-data.

4. The cloud system (10) according to any of the preceding claims, **characterized in that** the client unit (14) comprises at least one key means for encrypting and/or decrypting, in particular wherein only the client unit (14) comprises the key means.

5. The cloud system (10) according to any of the preceding claims, **characterized in that** the at least one server unit (12) is a cloud unit.

6. The cloud system (10) according to any of the preceding claims, **characterized in that** the server unit (12) and/or the client unit (14) are/is connected to the gate unit (16) via a respective network (18, 20).

7. The cloud system (10) according to any of the preceding claims, **characterized in that** the at least two different data formats are assigned to different server units (12).

8. A method of exchanging data from at least one server unit (12) to at least one client unit (14) of a secure multilayer cloud system (10), with the following steps:
- Transmitting data with at least two different data formats via the server unit (12),
- Receiving the data via a gate unit (16),
- Converting the data with the at least two different data formats into one common data format via the gate unit (16), and
- Forwarding the converted data to the client unit (14).

9. The method according to claim 8, **characterized by** the following steps:
- Transmitting data via the client unit (14),
- Receiving the data via a gate unit (16),
- Converting the data with a common data format in data with at least two different data formats via the gate unit (16), and
- Forwarding the converted data to the server unit (12).

10. A method of exchanging data from at least one client unit (14) to at least one server unit (12) of a secure multilayer cloud system (10), with the following steps:
- Transmitting data with a common data format via the client unit (14),
- Receiving the data via a gate unit (16),
- Converting the data with the common data format into data with at least two different data formats via the gate unit (16), and
- Forwarding the converted data to the server unit (12).

11. The method according to claim 10, **characterized by** the following steps:
- Transmitting data with at least two different data formats via the server unit (12),
- Receiving the data via a gate unit (16),
- Converting the data with the at least two different data formats into one common data format via the gate unit (16), and
- Forwarding the converted data to the client unit (14).

12. The method according to any of claims 8 to 11, **characterized in that** the data has an encrypted part and a virtually generated part with plaintext meta-data.

13. The method according to any of claims 8 to 12, **characterized in that** the client unit (14) comprises at least one key means for encrypting and/or decrypting, in particular wherein only the client unit (14) comprises the key means.

14. The method according to any of claims 8 to 13, **characterized in that** the server unit (12) and/or the client unit (14) are/is connected to the gate unit (16) via a respective network (18, 20).
